## Europäisches Patentamt
## European Patent Office
## Office européen des brevets

(11) Numéro de publication: **0 029 760**
**B1**

(12) **FASCICULE DE BREVET EUROPEEN**

(45) Date de publication du fascicule du brevet: **19.09.84**

(51) Int. Cl.³: **G 01 S 7/28**

(21) Numéro de dépôt: **80401525.3**

(22) Date de dépôt: **28.10.80**

(54) **Dispositif de filtrage et son application aux systèmes de visualisation radar.**

(30) Priorité: **27.11.79 FR 7929152**

(43) Date de publication de la demande:
**03.06.81 Bulletin 81/22**

(45) Mention de la délivrance du brevet:
**19.09.84 Bulletin 84/38**

(84) Etats contractants désignés:
**DE GB SE**

(56) Documents cités:
**FR-A-1 330 770**
**US-A-3 349 395**
**US-A-3 381 228**

**IEEE TRANSACTIONS ON AEROSPACE AND ELECTRONIC SYSTEMS, vol. AES-1, no. 3, décembre 1965 NEW YORK (US) V.G. HANSEN: "Studies of logarithmic radar receiver using pulse-length discrimination" pages 246-253**

(73) Titulaire: **THOMSON-CSF**
**173, Boulevard Haussmann**
**F-75379 Paris Cedex 08 (FR)**

(72) Inventeur: **Marchais, Jean-Claude**
**"THOMSON-CSF" SCPI 173, Bld. Haussmann**
**F-75360 Paris Cedex 08 (FR)**

(74) Mandataire: **Benoit, Monique et al**
**THOMSON-CSF SCPI 173, Bld Haussmann**
**F-75379 Paris Cedex 08 (FR)**

Courier Press, Leamington Spa, England.

# Description

La présente invention concerne un dispositif de filtrage et son application plus particulière aux systèmes de visualisation radar et aux dispositifs d'acquisition de poursuite.

Dans certains matériels concernant des dispositifs de visualisation radar il est nécessaire d'éliminer les échos indésirables et de réduire les bruits de toute nature afin d'éviter leur transmission sur l'écran de visualisation.

Plusieurs solutions sont connues par l'art antérieur:

Une première solution consiste à échantillonner le signal vidéo et à coder en numérique l'amplitude de chacun des échantillons. Le signal vidéo étant considéré généralement sur plusieurs récurrences radar, il peut alors être filtré en utilisant par exemple des filtres numériques constituant des éliminateurs d'échos fixes plus connus par leur désignation dans la terminologie anglo-saxonne sous l'abréviation M.T.I.

Une seconde solution consiste à mettre en mémoire tous les signaux d'une même récurrence, échantillonnés et codés en numérique, et à les comparer avec ceux de la récurrence précédente, après avoir modifié la position des signaux stockés dans la mémoire en fonction des valeurs présumées des paramètres vitesse radiale relative et distance des cibles observées.

Ces dispositifs, bien que réduisant fortement les signaux correspondant aux échos fixes, ne limitent que partiellement les faux échos dus à du bruit blanc et dont l'amplitude est élevée. De plus ces dispositifs fonctionnant en numérique, leur réalisation est complexe et le retard qu'ils introduisent entre l'instant de la détection et celui de la visualisation sur l'écran du tube cathodique peut être relativement important.

D'autre part, comme décrit dans IEEE transactions on aerospace and electronic systems vol AES-1 n° 3 VG Hansen, il est connu des dispositifs destinés à réduire les échos dûs au bruit blanc.

La présente invention vise à remédier à ces inconvénients par la définition d'un filtre ne laissant passer que des impulsions dont la largeur est comprise dans un intervalle de longueur prédéterminée, accroissant ainsi la probabilité de détection et réduisant de ce fait le taux de fausse alarme.

Un tel filtre peut être appelé de façon simple filtre de forme.

De ce fait, un bruit d'amplitude élevée mais de largeur temporelle très différente à la caractéristique du filtre, sera fortement atténué.

Selon une caractéristique le dispositif de filtrage notamment d'échos fixes selon l'invention, plus particulièrement connecté à la sortie des circuits vidéo d'un récepteur radar et recevant de ces circuits un signal $S_1$ échantillonné, comporte connectés en série, un détecteur de contraste délivrant le signal:

$$\frac{|S_1(i)|-|S_1(i-1)|}{|S_1(i)|+|S_1(i-1)|}$$

où i représente le rang d'un échantillon, un circuit d'intégration, et un circuit de soustraction connecté à la sortie du circuit d'intégration d'une part directement et d'autre part par l'intermédiaire d'un circuit introduisant un retard $\tau$.

D'autres avantages et caractéristiques de l'invention ressortiront de la description qui suit illustrée à l'aide des figures qui représentent:

— la figure 1, le schéma général du dispositif selon l'invention;
— les figures 2a, 2b, 2c et 2d des exemples de signaux idéaux mesurés en différents points du schéma de la figure 1;
— la figure 3, un premier exemple de réalisation du dispositif selon l'invention;
— la figure 4, un second exemple de réalisation du dispositif selon l'invention.

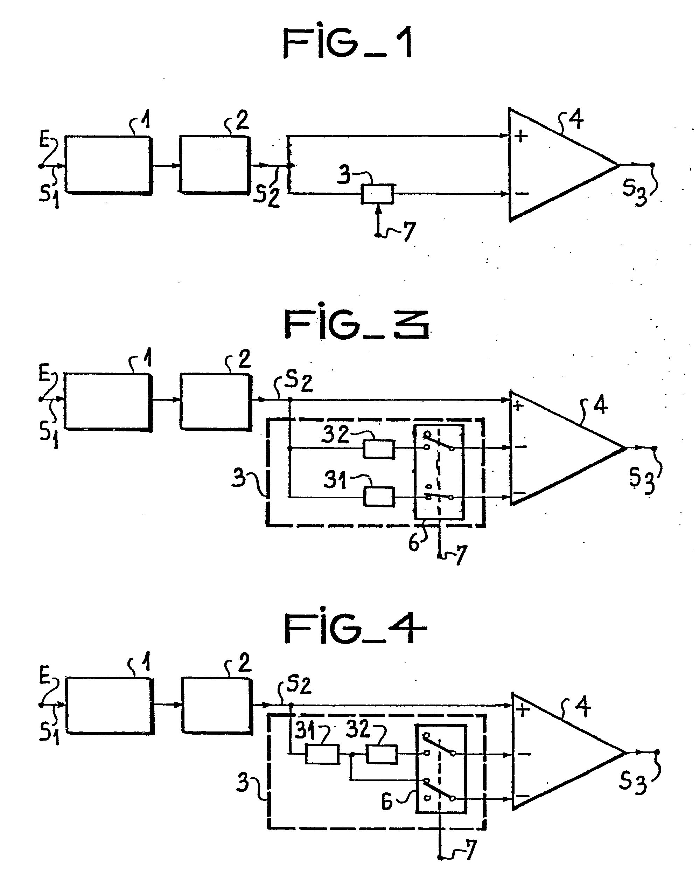

La figure 1 représente de façon schématique un dispositif de filtrage suivant l'invention c'est-à-dire un filtre de forme suivant la terminologie proposée, permettant de maximiser les signaux correspondants dont la durée correspond à une durée donnée prédéterminée.

Il comporte, montés en cascade, un détecteur de contraste 1, un circuit d'intégration 2 et un circuit de soustraction 4 connecté à la sortie du circuit d'intégration 2 directement et par l'intermédiaire d'un circuit 3 introduisant un retard dont la valeur est ajustable à l'aide d'un signal appliqué sur une borne 7. On notera $S_1$ le signal appliqué à l'entrée E du dispositif et correspondant au signal vidéo détecté et échantillonné, $S_2$ le signal mesuré à la sortie du circuit 2 d'intégration, et $S_3$ le signal disponible à la sortie du dispositif selon l'invention. Le signal $S_1$ est supposé préalablement échantillonné avec une période $\tau_1$ et le ième échantillon est noté $S_1(i)$.

Le détecteur de contraste 1 effectue l'opération:

$$\frac{|S_1(i)|-|S_1(i-1)|}{|S_1(i)|+|S_1(i-1)|}$$

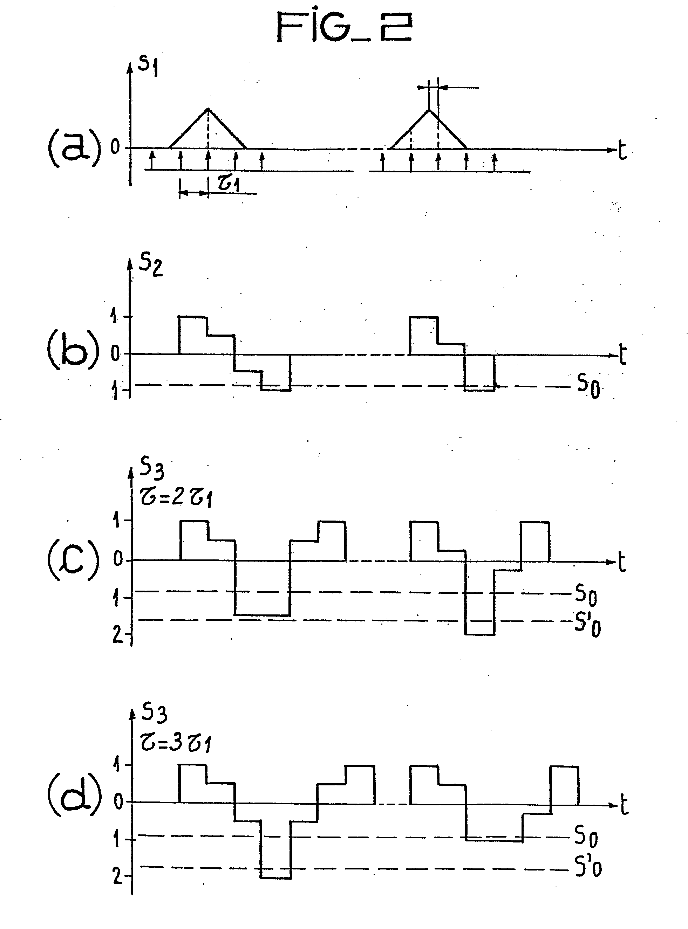

Si les amplitudes des échantillons du signal $S_1$ sont codées en numérique, le détecteur de contraste 1 peut être par exemple un calculateur numérique; ce circuit permet d'améliorer le rapport signal sur bruit. La figure 2a montre un exemple de signal $S_1$ supposé d'une durée supérieure à 2 $\tau_1$. Sur cette même figure sont montrés deux exemples de position relative du signal $S_1$ et du signal d'échantillonnage de période $\tau_1$. La figure 2b montre pour chacune de ces deux positions relatives, le signal $S_2$ mesuré à la sortie du circuit d'intégration 2. La partie exploitée du signal $S_2$ correspond, dans cet

exemple, aux valeurs négatives. On voit ainsi que la position temporelle de l'amplitude maximum de cette partie utile est fonction de la position relative de l'échantillonnage et du signal $S_1$. La forme proche d'une forme rectangulaire du signal $S_2$ est due à l'intégration effectuée par le circuit 2.

Sur cette figure 2b, l'amplitude maximale utile, négative, est toujours maximum ($S_2=-1$). En réalité, le signal reçu, tout en gardant une largeur (temporelle) constante, n'a que rarement une forme aussi idéale. En effet, les fluctuations de phase ou de fréquence, dans le cas de signaux Doppler par exemple, provoquent de fortes déformations de ce signal $S_1$ qui peut alors, dans certains cas, présenter des valeurs intermédiaires nulles. Des expérimentations ont montré que dans ce cas si l'échantillonnage découpait l'intervalle de temps du signal $S_1$ de façon symétrique, la partie négative utile du signal $S_2$ restait maximum. Par contre, et c'est le cas le plus fréquent dans la pratique, si le découpage du signal $S_1$ est effectué de façon quelconque, le signal $S_2$ présente une partie utile négative dont la valeur absolue est inférieure à 1. Si $\alpha$ représente le décalage temporel par rapport au découpage symétrique idéal, les mesures montrent des atténuations allant jusqu'à 8 dB pour

$$\frac{\alpha}{\tau_1}=0,5.$$

Le circuit de retard 3 et le circuit de soustraction 4, en combinaison avec le détecteur de contraste 1 et le circuit d'intégration 2, permettent de remédier à cet inconvénient. La figure 2c montre le signal $S_3$ obtenu à la sortie du circuit de soustraction 4 dans le cas où $\tau=2\,\tau_1$.

On constate dans ce cas, un gain voisin d'un facteur 2 du signal utile (partie négative de $S_3$) permettant ainsi de remonter le seuil de visualisation de la valeur $S_o$ à la valeur $S'_o$, ce qui a pour résultat d'améliorer le rapport signal su bruit. Des mesures expérimentales ont montré que dans ce cas, quelle que soit la position des échantillons par rapport au signal $S_1$, et la forme réelle du signal $S_1$, l'atténuation en fonction de $\alpha/\tau_1$ reste très inférieure à 3dB. Si le retard $\tau$ est modifié de façon à être égal à $3\,\tau_1$ alors le signal $S_1$ dont la durée est comprise entre $2\,\tau_1$ et $3\,\tau_1$ ne présente à la sortie du soustracteur 4 des valeurs d'amplitude supérieures en valeur absolue à $S'o$, que dans le cas d'un échantillonnage symétrique. Audelà de $\tau=3\,\tau_1$ les signaux de $S_3$ sont tels que $|S_3|<S'o$, de même pour $\tau=2\,\tau_1$, des signaux $S_3$ de largeur temporelle, par exemple $\tau_1$, donc inférieure à $\tau$, donneront un signal $S_3$ dont la composante utile négative reste très inférieure a' $S'o$. On a ainsi réalisé un filtre de forme dont la bande passante correspond à des impulsions dont la durée est centrée autour de la valeur $\tau$ réglable.

La figure 3 montre une variante de réalisation du dispositif de la figure 1 intéressant principalement le circuit de retard 3 qui comporte un premier circuit 31 introduisant un retard de valeur $\tau_1$ dont l'entrée est connectée à la sortie du circuit d'intégration 2, et la sortie à un ensemble d'interrupteurs commandés 6 pouvant être, dans le cas d'une réalisation en numérique, par exemple des circuits logiques de type ET et d'autre part par l'intermédiaire d'un second circuit 32 introduisant un même retard $\tau_1$. La commande 7 permet ainsi de commander le retard $\tau$ qui trouve quantifié. La limitation de la figure 3 à deux circuits de retard 31 et 32 ne constitue qu'un exemple non limitatif, et dans le cas général on a $\tau=k'\tau_1$ avec $k'$ un entier positif.

La figure 4 montre une deuxième variante de réalisation du dispositif de la figure 1. Le circuit de retard 3 comporte alors un ensemble de circuits 31, 32 connectés en série dont le nombre peut être supérieur à deux, chacun de ces circuits 31, 32 introduisant un retard différent.

Un ensemble d'interrupteurs commandés 6 est disposé de façon que chaque sortie des circuits 31, 32 est connectée au circuit 4 par un interrupteur. On obtient alors un filtre de forme dont la bande passante est élargie si les circuits 31, 32 introduisent des retards décalés les uns par rapport aux autres d'une valeur constante et peu importante.

Dans une version numérique du dispositif selon l'invention, le circuit intégrateur 2 peut par exemple être remplacé par un circuit sommateur, le circuit de retard 3 par un ensemble de registre mémoire à décalage, et le circuit de soustraction 4, soit par un circuit de calcul effectuant la soustraction, soit par un ensemble de circuits logique du type porte OU dans le cas de plusieurs circuits de retard montés en parallèle comme cela est le cas à la figure 4.

Dans une variante de réalisation du dispositif selon l'invention, le détecteur de contraste 1 et le circuit d'intégration peuvent avoir leurs positions respective permutées.

On a ainsi décrit un filtre de forme et son application aux systèmes de visualisation radar, et aux dispositifs d'acquisition de poursuite.

**Revendications**

1. Dispositif de filtrage notamment d'échos fixes plus particulièrement connecté à la sortie des circuits vidéo d'un récepteur radar, et recevant de ces circuits un signal ($S_1$) échantillonné avec une période $\tau_1$, caractérisé en ce qu'il comporte connectés en cascade, un détecteur de contraste (1) délivrant le signal

$$\frac{|S_1(i)|-|S_1(i-1)|}{|S_1(i)|+|S_1(i-1)|}$$

où i représente le rang d'un échantillon, un circuit d'intégration (2) et un circuit de soustraction (4) connecté à la sortie du circuit d'intégration d'une part directement et d'autre part par l'intermédiaire d'un circuit introduisant un retard $\tau$ supérieur à la période d'échantillonnage.

2. Dispositif de filtrage selon la revendication 1, caractérisé en ce que le retard $\tau$ est ajustable.

3. Dispositif de filtrage selon la revendication 2, caractérisé en ce que le circuit de retard (3) comporte plusieurs circuits de retard élémentaires (31, 32) connectés en parallèle et/ou en série à un moyen de commutation (6) dont la sortie est connectée au circuit de soustraction (4).

4. Dispositif de filtrage selon la revendication 1, caractérisé en ce que le circuit de soustraction (4) est remplacé par un circuit logique (5) du type porte OU.

5. Dispositif de filtrage selon la revendication 1, caractérisé en ce que $\tau = k\,\tau_1$ avec k un nombre entier positif.

6. Dispositif de filtrage selon la revendication 1, caractérisé en ce que le détecteur de contraste (1) est un calculateur numérique ou analogique.

7. Dispositif de filtrage selon la revendication 1, caractérisé en ce que le circuit d'intégration (2) est un circuit d'addition.

8. Dispositif de filtrage selon la revendication 1, caractérisé par le fait qu'il comprend, connectés en cascade un circuit d'intégration (2), et un circuit détecteur de contraste (1) les signaux filtrés étant codés en numérique.

9. Utilisation d'un dispositif selon une quelconque des revendications précédentes pour la visualisation radar.

**Patentansprüche**

1. Vorrichtung zum Ausfiltern insbesondere von Festechos, die insbesondere an den Ausgang der Videoschaltungen eines Radarempfängers angeschlossen ist und aus diesen Schaltungen ein mit der Periode $\tau_1$ getastetes Abtastsignal ($S_1$) empfängt, dadurch gekennzeichnet, daß sie in Kaskade geschaltet einen Kontrastdetektor (1), der das Signal

$$\frac{|S_1(i)| - |S_1(i-1)|}{|S_1(i)| + |S_1(i-1)|}$$

abgibt, worin i die Ordnungszahl einer Abtastprobe ist, eine Integrierschaltung (2) und eine Subtrahierschaltung (4) enthält, welche an den Ausgang der Integrierschaltung einerseits direkt und andererseits über eine Schaltung angeschlossen ist, welche eine Verzögerung $\tau$ bewirkt, die größer als die Abtastperiode ist.

2. Filtervorrichtung nach Anspruch 1, dadurch gekennzeichnet, daß die Verzögerung $\tau$ einstellbar ist.

3. Filtervorrichtung nach Anspruch 2, durch gekennzeichnet, daß die Verzögerungsschaltung (3) mehrere elementare Verzögerungsschaltungen (31, 32) enthält, die parallel und/oder in Reihe an eine Umschalteinrichtung (6) angeschlossen sind, deren Ausgang mit der Subtrahierschaltung (4) verbunden ist.

4. Filtervorrichtung nach Anspruch 1, dadurch gekennzeichnet, daß die Subtrahierschaltung (4) durch eine Logikschaltung (5) vom Typ eines OR-Gatters ersetzt ist.

5. Filtervorrichtung nach Anspruch 1, dadurch gekennzeichnet, daß $\tau = k\tau_1$, worin k eine positive ganze Zahl ist.

6. Filtervorrichtung nach Anspruch 1, dadurch gekennzeichnet, daß der Kontrastdetektor (1) ein digitaler oder analoger Rechner ist.

7. Filtervorrichtung nach Anspruch 1, dadurch gekennzeichnet, daß die Integrierschaltung (2) eine Additionsschaltung ist.

8. Filtervorrichtung nach Anspruch 1, dadurch gekennzeichnet, daß sie in Kaskade geschaltet eine Integrierschaltung (2) und einen Kontrastdetektor (1) enthält, wobei die gefilterten Signale digital codiert sind.

9. Verwendung einer Vorrichtung nach einem der vorstehenden Ansprüche zur Sichtdarstellung in Radargeräten.

**Claims**

1. Device for filtering especially fixed echoes, particularly connected to the output of the video circuits of a radar receiver and receiving from these circuits a signal ($S_1$) which is sampled with the period $\tau_1$, characterized in that it comprises, connected in cascade, a contrast detector (1) delivering the signal

$$\frac{|S_1(i)| - |S_1(i-1)|}{|S_1(i)| + |S_1(i-1)|}$$

wherein i represents the order of a sample, an integrating circuit (2) and a subtracting circuit (4) connected to the output of the integrating circuit, directly on the one hand and on the other hand through a circuit introducing a delay $\tau$ exceeding the sampling period.

2. Filtering device according to claim 1, characterized in that the delay $\tau$ is adjustable.

3. Filtering device according to claim 2, characterized in that the delay circuit (3) comprises a plurality of elementary delay circuits (31, 32) connected in parallel and/or in series to switching means (6) the output of which is connected to the subtracting circuit (4).

4. Filtering device according to claim 1, characterized in that the subtracting circuit (4) is replaced by a logic circuit (5) of OR gate type.

5. Filtering device according to claim 1, characterized in that $\tau = k\,\tau_1$, k being a positive integer.

6. Filtering device according to claim 1, characterized in that the contrast detector (1) is a digital or analog computer.

7. Filtering device according to claim 1, characterized in that the integrating circuit is an adder circuit.

8. Filtering device according to claim 1, characterized by the fact that it comprises, connected in cascade, an integrating circuit (2) and a contrast detector circuit (1), the filtered signals being digitally coded.

9. Use of a device according to any of the preceding claims for radar visualization.

0 029 760

FIG_1

FIG_3

FIG_4

1

# FIG_2

(a)

$S_1$

$\tau_1$

(b)

$S_2$

$S_0$

(c)

$S_3$

$\tau = 2\tau_1$

$S_0$

$S'_0$

(d)

$S_3$

$\tau = 3\tau_1$

$S_0$

$S'_0$